# EUROPÄISCHE PATENTSCHRIFT

(11) **EP 0 646 153 B1**
(45) Veröffentlichungstag und Bekanntmachung des Hinweises auf die Patenterteilung: **21.08.1996**
(21) Anmeldenummer: 92901048.6
(22) Anmeldetag: 13.12.1991
(51) Int. Cl.: C08J 9/36, C04B 16/10, C04B 20/04

(54) **VERFAHREN UND VORRICHTUNG FÜR DIE GEWINNUNG UND BEHANDLUNG VON FÜLLSTOFFEN**
METHOD AND DEVICE FOR PRODUCING AND PROCESSING FILLERS
PROCEDE ET DISPOSITIF POUR L'OBTENTION ET LE TRAITEMENT DE CHARGES

(30) Priorität: 14.12.1990 DE 4040078
(43) Veröffentlichungstag der Anmeldung: 05.04.1995
(73) Patentinhaber: STRACKE, Markus, A-1010 Wien (AT)
(72) Erfinder: STRACKE, Markus, A-1010 Wien (AT)
(74) Vertreter: Gibler, Ferdinand, Dipl.Ing. Dr. techn.
(86) Internationale Anmeldenummer: AT9100131
(87) Internationale Veröffentlichungsnummer: WO9210534

(56) Entgegenhaltungen:
- WO-A-88/05765
- AT-A- 15 640
- AT-B- 391 862
- AT-B- 392 962
- GB-A- 1 263 340
- US-A- 4 790 967

## Beschreibung

Bekannt sind Zuschlagstoffe für Leichtbetone, Drainbetone oder Isolierputzmassen, welche aus aufgeschäumten Polystyrolgranulat bestehen. Zum Beispiel Styropor oder dergleichen. Diese aufgeschäumten Stoffe werden mit Klebern oder Zementleim oder dergleichen gemischt und auch als "Sackware" trocken - bereits mit Zementanteilen (Zementpulver) vermischt - als Trockenmasse im Handel angeboten.

Die dabei verwendeten Polystyrolschaumstoffpartikel sind einerseits nicht sehr fest, da die Wandungen der Kunststoff-Schaumbläschen der Schaumstoffpartikel überall annähernd gleich stark sind. Andererseits ist auch die Schwierigkeit - nämlich, daß der Kleber oder ein Zementleim nicht sehr gut an den Polystyrolschaumpartikeln haften - nicht unbeträchtlich.

Erfindungsgemäß sollen diese Nachteile vermieden werden, wobei darüberhinaus noch zusätzliche Verbesserungen der Materialeigenschaften erzielt werden sollen.

Erfindungsgemäß wird dies so gelöst, als einerseits frisch aufgeschäumtes Polystyrolmaterial in Flockengröße oder Partikelgrößen von 0,5 mm bis 20 mm oder darüber (oder sinnvollerweise zerkleinerte Polystyrolschaumstoffmaterialien) vor deren Einsatz einer Hitzebehandlung, besser gesagt, einer Sinterbehandlung, unterzogen werden.

Dabei wird die Teilchenoberfläche der Flocken kurzzeitig einem Temperaturschock von 300 bis 800 Grad C - oder sogar darüber - ausgesetzt.

Dabei schmilzt die Teilchenoberfläche extrem stark an, was einerseits zu einem Schrumpfen und zu einer Verfestigung der Teilchenoberfläche führt. Andererseits führt dabei ein Teil der zugeführten Wärme, zufolge des Wärmestaues in der der Hitze ausgesetzten Menge dazu, daß ein Anteil der Schaumstoffpartikel "nachschäumt" weil die in den Bläschen der Partikel befindliche Luft- oder Treibgasreste expandieren und den plastisch gewordenen Polystyrolschaum entsprechend erweitern.

Durch diesen Überraschungseffekt wird nun ein Teil der durch die Anschmelzung eingebüßten Korngröße wieder teilweise oder ganz wettgemacht.

Somit wird einerseits erreicht, daß die Oberfläche der Schaumstoffpartikel extrem verfestigt wird und andererseits wird auch bewirkt, daß dadurch eine ansonsten in der Anwendung der Produkte mögliche Wassereindringung in das Innere der Schaumstoffpartikel vermieden wird.

Die Verfestigung der Partikel gegenüber den unbehandelten Flocken beträgt ein Vielfaches der ursprünglichen "Flockenfestigkeit". Je nach Anschmelzgrad und Art des Ausgangsmateriales läßt sich die Endeigenschaft der gesinterten Flocken variieren.

Ein Ausgangsmaterial wie zum Beispiel "Automatenmaterial" der Rohdichte 0,02 bis 0,025 ergibt ein Mehrfaches an Endfestigkeit als Flocken der Dämmplattenausgangsstoffe.

Um nun eine zu starke Überhitzung beim "Sintervorgang" zu vermeiden kann das zu sinternde Material nach der Sinterung mittels "Kälteschocks" zwischengekühlt - und gehärtet - werden. Die Kältebehandlung erfolgt mittels Kaltluftstromes oder auch mit Wasser.

Bei Sinterung von großen Teilchen - z.B. Teilchengröße 15 mm bis 30 mm als Ausgangsteilchengröße - kann eine Mehrfach-Sinterung mit dazwischenfolgenden Kühlphasen erforderlich sein. Vorteilhafterweise wird dabei das zu sinternde Material auf Siebflächen gebracht, dabei mechanisch bewegt und dabei von außen her mittels Heißluft, Dampf, Heißdampf oder sogar mittels Beflammung beaufschlagt. Bei Beflammungen dürfen erfahrungsgemäß nur kurze Flammstöße erfolgen. Die Dauer der Flammstöße beträgt höchstens 0,5 bis 1 Sekunden.

Weiters kann eine Zwischenlagerung der jeweils gesinterten Mengen erforderlich sein um zu bewirken, daß dabei das Material durch und durch auskühlen kann.

Grundsätzlich wird durch eine plötzliche Kälteschockbehandlung des frisch gesinterten Schaumstoffmateriales die unmittelbar vorher plastisch gewesene Außenhaut der gesinterten Flocken versprödet. Dadurch kann eine überproportionale Festigkeitssteigerung der Partikel erreicht werden.

Dieser im Kunststoffbereich ansonsten unangenehme Vorgang wird im erfindungsgemäßen Fall zu einem Vorteil umgewandelt.

Es zeigte sich auch, daß die nun solcherart gesinterten Schaumstoffteilchen siebbar geworden sind. Dies bedeutet, daß diese Sinterpartikel gegenüber ungesinterten Flocken mittels Siebanlagen in einzelne Fraktionen sortierbar geworden sind. Damit erübrigt sich weitgehend die Herstellung von jeweils den Endkorngrößen entsprechenden schäumbaren Granulaten.

Da nun auch Polystyrolschaumstoffpartikel als Zuschlagstoffe in Form von Sackware als Handelsware erwünscht sein können, weil oftmals erst "vor Ort" abgemischt werden kann, wird auch nach erfindungsgemäßem Verfahren behandeltes gesintertes Polystyrolschaumstoff-Material entsprechend zugemischt werden können.

Darüberhinaus wird es oft erforderlich sein, daß das Schaumstoff-Zuschlagmaterial besser mischbar gemacht wird. Erfindungsgemäß wird dabei so vorgegangen, als zerkleinertes Polystyrolschaumstoff-Material in der gewünschten Korngröße (z.B. 2-8 mm) welches auch vorher der dargestellten Sinterbehandlung unterzogen worden sein kann, wie folgend beschrieben, mischbar gemacht wird:

Die einzelnen Partikel werden erfindungsgemäß in einen Trogmischer oder ähnlichem zunächst mit einer Mischung von Wasser und Wasserglas (30 bis 40 Vol.-% Wasser und 70 bis 60 Vol.-% Wasserglas - oder 50 zu 50 % Wasser zu Wasserglas ) benetzt, wobei im selben Mischzyklus die gesamte Benetzungsflüssigkeit durch Zugabe von Zementpulver gebunden wird.

Durch die nun erfolgende "Schnellhärtung" des Zementanteiles können die so ummantelten Partikel unmittelbar nach Mischende in die Handelsbehälter - wie zum Beispiel in Plastiksäcke - gefüllt werden.

Die so behandelten Zuschlagstoffe können nun vor Ort auch in Freifallmischern unter Zugabe von Zement und Anmachwasser zu entsprechenden Leichtbetonen verarbeitet werden.

Der Zementleim haftet nun bestens an der rauhen Ummantelungsschicht der Polystyrolschaumstoffpartikel.

Auch als Beimengungsstoff für trocken vorbereitete Mischungen in Säcken eignet sich dieserart vorbehandeltes Zuschlagstoff-Material.

Weiters sind solcherart vorbehandelte Zuschlagstoffe auch unter Beimengung zu anderen Stoffen wie Trass, Zement, Perlite, Steinmehl und dgl. beimischbar, ohne daß dabei in größeren Behältern beim Transport die ansonsten sehr gefürchteten Entmischungen passieren, weil die ummantelten Teilchen nicht mehr jene Gleitfähigkeit wie vorher aufweisen. Besonders dann nicht, wenn die Partikel außerdem "gesintert" wurden.

Obendrein kann das "gesinterte" Material zum Beispiel bei der Anwendung als Zuschlagstoff für Verputze oder Fertigputze erhebliche Vorteile bringen, weil einerseits die Festigkeit der Masse dadurch wesentlich gesteigert ist und andererseits, weil die sonst sehr schädliche Wasseraufnahme erheblich reduzierbar geworden ist. Auch wird dabei das Schwindverhalten des Putzes verbessert, weil die "Steifigkeit" der gesinterten Partikel weniger Eigenbewegungen der Masse zuläßt.

Als Ausführungsbeispiel einer Sinteranlage kann angegeben werden, daß Schaumstoff-Flocken in einen zum Beispiel 5 m² großen Behälter in Schichtstärke von etwa 5 cm gebracht werden. Der Boden und die Wandungen dieses Behälters bestehen aus einem 1 mm x 1 mm Maschensieb aus hitzebeständigem Material.

Dieser Behälter wird rüttelnd bewegt und ist schräg geneigt.

Während dieser Bewegung wird Heißluft von unten oder von Seiten durch das Sieb geblasen, wobei sich die Schaumstoffpartikel sintern lassen, ebenso sind dabei auch entsprechende Kaltluftdüsen angeordnet, die sich jeweils, insbesondere bei der Materialaustrittsöffnung befinden.

Auch zahlreiche Variationen dieser Anordnung lassen sich unschwer an die Erfordernisse anpassen. Damit soll gesagt sein, daß das gegenständliche Sinterverfahren keine komplizierten Apparaturen erfordert.

## Patentansprüche

1. Verfahren zur Herstellung von Leichtzuschlagsstoffen aus wärmebehandelten Polystyrolschaumstoffteilchen, **dadurch gekennzeichnet,** daß diese einem kurzzeitigen Temperaturschock von 300°C bis 800°C und darüber unterzogen werden, und daß nach der Wärmebehandlung der Partikel eine Zwischenkühlung zur Versprödung der Oberfläche, bspw. mittels Kaltluftstrom oder Wasser, insbesondere eine Kälteschockbehandlung, erfolgt, und gegebenenfalls mehrere Wärme- und Kühlbehandlungen alternierend durchgeführt werden.

2. Vorrichtung zur Durchführung des Verfahrens nach Anspruch 1, **dadurch gekennzeichnet,** daß sie einen Behälter zur Aufnahme des zu sinternden Materials umfaßt, dessen Boden und Wandungen aus hitzebeständigem Maschensieb bestehen, daß der Behälter geneigt angeordnet und gegebenenfalls mit einer Rüttelvorrichtung versehen ist, und daß Düsen zum Einblasen von vorzugsweise Heißluft in den Behälter und an der Materialaustrittsöffnung Kaltluftdüsen angeordnet sind.

3. Verfahren zur Herstellung von leichten Betonzuschlagstoffen, **dadurch gekennzeichnet,** daß Polystyrolschaumstoffpartikel, gegebenenfalls gemäß Anspruch 1 vorbehandelt, im Mischtrog eines Zwangsmischers mit einer Mischung aus Wasser und Wasserglas benetzt werden und im selben Mischzyklus anschließend mit soviel Zementpulver versetzt werden, daß die gesamte Menge der Benetzungsflüssigkeit mit Zementpulver gebunden wird.

## Claims

1. Process for producing lightweight aggregates from heat-treated polystyrene foam particles, characterized in that these are subjected to a brief thermal shock from 300°C to 800°C and above and that, after the heat-treatment of the particles, intermediate cooling is carried out to embrittle the surface, for example by means of a cold air stream or water, in particular a quenching treatment, and if desired a plurality of heat and cooling treatments are carried out alternately.

2. Apparatus for carrying out the process according to Claim 1, characterized in that it comprises a container for accommodating the material to be sintered, the bottom and walls of the container comprising heat-resistant mesh, in that the container is arranged in an inclined position and, if desired, is provided with a shaking apparatus and in that nozzles are provided for blowing, preferably, hot air into the container and cold air nozzles are arranged at the material outlet.

3. Process for producing lightweight concrete aggregates, characterized in that polystyrene foam particles, if desired pretreated according to Claim 1, are wetted in the mixing trough of a mechanical mixer with a mixture of water and water glass and, in the same mixing cycle, are subsequently admixed with such an amount of cement powder that the total amount of the wetting liquid is bound by cement powder.

## Revendications

1. Procédé de préparation d'additifs légers constitués de particules de substances alvéolaires de polystyrène soumises à un traitement thermique, caractérisé par le fait que ces particules sont soumises à un bref choc thermique, dans une plage allant de 300°C à 800°C et plus, et que, après le traitement thermique des particules, un refroidissement intermédiaire est effectué pour fragiliser la surface, par exemple par un courant d'air froid ou d'eau, en particulier un traitement à choc par le froid, et, le cas échéant, plusieurs traitements par la chaleur et par le froid étant effectués en alternance.

2. Dispositif pour mettre en oeuvre le procédé selon la revendication 1, caractérisé par le fait qu'il comprend un réservoir destiné à contenir le matériau à fritter, réservoir dont le fond et les parois sont constitués d'un tamis à mailles, résistant à la chaleur, que le récipient est disposé incliné et, le cas échéant, est pourvu d'un dispositif de secouage, et que sont disposées des buses, destinées à insuffler de préférence de l'air chaud dans le récipient, et des buses d'air froid sur l'ouverture de sortie du matériau.

3. Procédé pour la préparation d'additif de béton léger, caractérisé par le fait que les particules de substances alvéolaires en polystyrène sont pré-traitées, le cas échéant selon la revendication 1, sont mouillées dans l'auge de mélange d'un mélangeur à mélange forcé, avec un mélange constitué d'eau et de silicate de potassium, et sont mélangées dans le même cycle de mélange ensuite avec une quantité de poudre de ciment telle que la totalité de la quantité du liquide de mouillage est liée à la poudre de ciment.
